Europäisches Patentamt

European Patent Office

Office européen des brevets

(11) Veröffentlichungsnummer : **0 186 078**
**B1**

(12) **EUROPÄISCHE PATENTSCHRIFT**

(45) Veröffentlichungstag der Patentschrift :
07.03.90

(51) Int. Cl.$^5$ : **B 29 B   7/76**

(21) Anmeldenummer : 85115969.9

(22) Anmeldetag : 13.12.85

(54) **Mischkopf zum Vermischen mindestens zweier bei ihrer Reaktion Schaumstoff bildender Kunststoffkomponenten, insbesondere Polyurethan.**

(30) Priorität : 21.12.84 DE 3446818

(43) Veröffentlichungstag der Anmeldung :
02.07.86 Patentblatt 86/27

(45) Bekanntmachung des Hinweises auf die Patenterteilung : 07.03.90 Patentblatt 90/10

(84) Benannte Vertragsstaaten :
AT BE CH DE FR GB IT LI NL SE

(56) Entgegenhaltungen :
DE--A-- 2 847 504
DE--A-- 3 005 231
DE--A-- 3 011 132

(73) Patentinhaber : ELASTOGRAN POLYURETHANE
GMBH
Landwehrweg
D-2844 Lemförde (DE)

(72) Erfinder : Wallner, Josef
Brauneckstrasse 2
D-8150 Holzkirchen (DE)

(74) Vertreter : Springer, Hans Jörg, Dr. et al
BASF Aktiengesellschaft Patentabteilung Carl-Bos-
ch-Strasse 38
D-6700 Ludwigshafen (DE)

## Beschreibung

Die Erfindung betrifft einen Mischkopf nach dem Oberbegriff des Anspruches 1.

Bei einem bekannten Mischkopf der vorstehend genannten Art (DE-OS 20 07 935) ist das Drosselorgan vorgesehen, um im Anschluß an den Eintritt der zu vermischenden Komponenten in die Mischkammer und vor dem Austritt aus dieser Mischkammer eine Drosselstelle zu bilden, die die Mischung günstig beeinflussen soll. Das Drosselorgan weist einen kreisrunden Querschnitt auf. Seine vordere Stirnfläche ist flach. Wenn gedrosselt werden soll, wird das Drosselorgan mehr oder weniger weit in die Mischkammer eingefahren. Da die Stirnfläche flach ist, kann das Drosselorgan relativ weit in die Mischkammer eingefahren werden, und zwar solange, bis die entsprechenden Punkte der Stirnfläche an der Mischkammerwand anstoßen. Es verbleibt dann aber noch eine mehr oder weniger große Öffnung, die im Querschnitt halbkreisförmig ist bzw. einen Kreisabschnitt darstellt. Wenn der Durchmesser bzw. Querschnitt des Drosselorgans geringer ist als derjenige der Mischkammer, dann kann das Drosselorgan verhältnismäßig weit eingeschoben werden, dann verbleibt aber links und rechts vom Drosselorgan ein verhältnismäßig großer, ungedrosselter Querschnitt. Ist der Querschnitt des Drosselorgans ebenso groß wie derjenige der Mischkammer, dann kann das Drosselorgan nur bis zur Hälfte vorgeschoben werden und es verbleibt vor seiner Stirnfläche eine Durchtrittsöffnung für das Komponentengemisch in Halbkreisform. Ein derartiges Drosselorgan mit flacher Stirnfläche läßt in seiner zurückgezogenen Stellung in dem Gehäuse vor seiner Stirnfläche einen mit der Mischkammer in Verbindung stehenden, im Querschnitt ungefähr V- oder U-förmigen Raum frei, der bei der Bewegung des Reinigungskolbens in Richtung auf die Austrittsöffnung der Mischkammer nicht überstrichen wird. In diesem Raum vor dem Drosselorgan sammeln sich Komponentenreste, die der Reinigungskolben nicht entfernen kann und die unerwünscht sind.

Bei einem anders gestalteten Mischkopf ist es nun schon vorgeschlagen worden, die Form der Stirnfläche der Kontur der beispielsweise im Querschnitt kreisrunden Mischkammer anzupassen, so daß praktisch an der Stirnfläche zwei Zungen entstehen. In der zurückgezogenen Stellung füllt das Drosselorgan seine Bohrung dann vollständig aus und es verbleibt kein Raum, den der Reinigungskolben bei seiner Bewegung in Richtung auf die Austrittsöffnung der Mischkammer nicht überstreicht. Es ist für eine vollständige Reinigung gesorgt. Wenn dieses Drosselorgan dann aber in seine Drosselstellung vorgeschoben wird, stoßen die Zungen sehr früh an die Mischkammerwand an, so daß ein weiteres Vorschieben nicht möglich ist. Es verbleibt eine relativ große, linsenförmige Öffnung, so daß die Drosselwirkung häufig zu gering ist.

Der Erfindung liegt nun die Aufgabe zugrunde, einen Mischkopf der eingangs genannten Art zu schaffen, bei dem einerseits keine Ansammlung von Komponentenresten vor der Stirnfläche des Drosselorgans erfolgt, d. h. eine vollständige Reinigung möglich ist, und andererseits eine gute Drosselwirkung erzielt werden kann.

Diese Aufgabe wird grundsätzlich durch das Kennzeichnen des Anspruches 1 gelöst.

Dadurch, daß die Form der Stirnfläche des Drosselorgans der Kontur der Mischkammer angepaßt ist, ist kein Raum vorhanden, in dem sich Material ansammeln kann bzw. es ist eine vollständige Reinigung durch den Ausstoßkolben möglich. Wenn das Drosselorgan nun beim Vorschieben in die Mischstellung um 90° gedreht wird, so drehen sich die beiden Zungen, die durch die entsprechende Ausbildung der Stirnfläche entstanden sind, im Verhältnis zur Mischkammer nach oben und unten, so daß das Drosselorgan sehr viel weiter in die Mischkammer einfahrbar ist, da die Zungen praktisch erst auf der dem Drosselorgan gegenüberliegenden Mantelfläche an die Mischkammerwand anstoßen. Es wird ein sehr großer Teil des Querschnitts der Mischkammer vom Drosselorgan auf diese Weise ausgefüllt. Beim Zurückziehen des Drosselorgans erfolgt eine umgekehrte Drehung, so daß dieses nach Rückkehr in seine Ausgangsstellung wieder seine alte Lage einnimmt und seine Bohrung vollständig ausfüllt, so daß der Ausstoßkolben dann seinen Reinigungshub durchführen und die Mischkammer vollständig reinigen kann.

Die Durchführung der Drehbewegung, die vorzugsweise mit der Bewegung in die Drosselstellung synchronisiert sein kann, kann in der unterschiedlichsten Weise durchgeführt werden. Eine Möglichkeit ist in den Ansprüchen 2 und 3 angegeben.

Wenn der Mischkopf so ausgestaltet ist wie in Anspruch 4 angegeben, dann verbleiben links und rechts neben dem Drosselorgan in der Mischkammer kleine offene Querschnittsflächen, durch die das Komponentengemisch um das Drosselorgan herumgedrückt wird. Dieses kann einen günstigen Einfluß auf die Mischung haben.

Im folgenden wird die Erfindung unter Hinweis auf die Zeichnung anhand eines Ausführungsbeispiels näher erläutert.

Es zeigt:

Fig. 1 einen schematischen Längsschnitt durch eine Ausführungsform eines Mischkopfes nach der Erfindung;

Fig. 2 einen Querschnitt gemäß der Linie II-II der Fig. 1;

Fig. 3 eine der Fig. 2 entsprechenden Querschnitt, bei dem das Drosselorgan sich jedoch in Drosselstellung befindet.

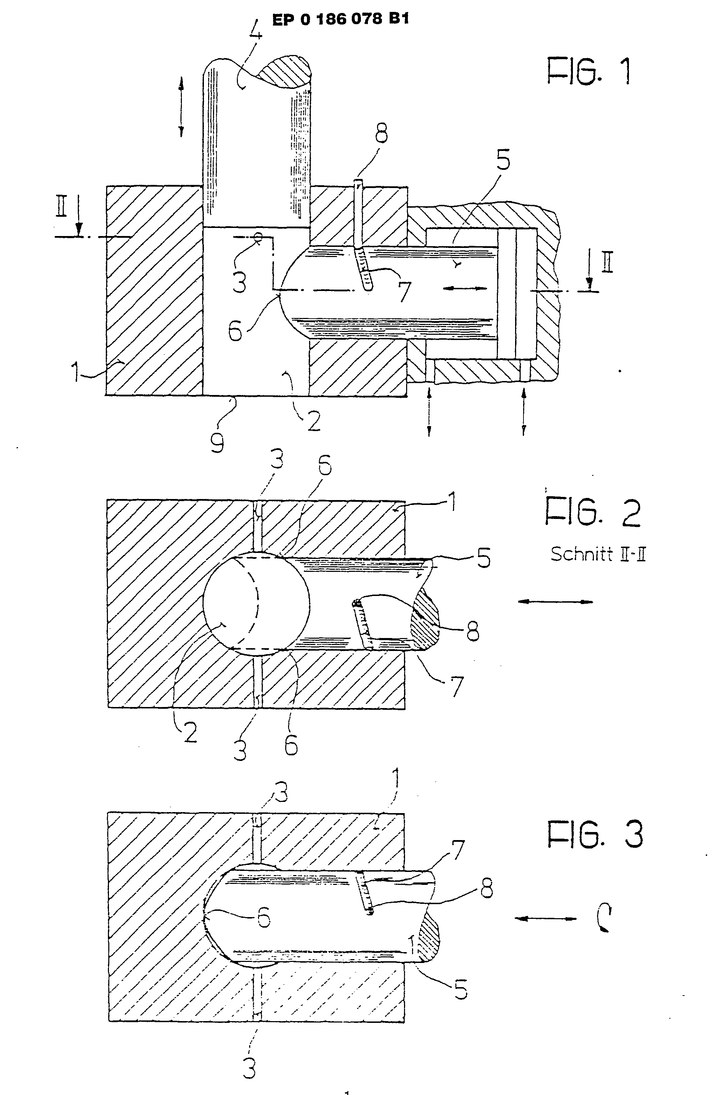

Der in der Zeichnung dargestellte Mischkopf ist grundsätzlich bekannt und nur schematisch dargestellt. Er besteht aus einem Gehäuse 1, in dem eine Mischkammer 2 ausgebildet ist, die bei dieser Ausführungsform einen kreisrunden Querschnitt aufweist, obwohl auch andere Querschnittsformen möglich sind. In die Mischkammer führen zwei Eintrittsöffnungen 3 für die zu vermischenden Kunststoffkomponenten. Es ist lediglich eine Eintrittsöffnung zu erkennen. In der Mischkammer ist ein Reinigungskolben 4, der dem Querschnitt der Mischkammer angepaßt ist, hin- und herbewegbar. In Fig. 1 ist die Mischstellung gezeigt, d. h. die Eintrittsöffnungen sind frei. Wenn ein Mischvorgang, d. h. ein « Schuß » beendet ist, wird der Reinigungskolben 4 in Richtung auf die Austrittsöffnung 9 bewegt, wobei er die Eintrittsöffnungen verschließt und die Mischkammer mechanisch reinigt.

Senkrecht zur Mischkammerachse ist ein Drosselorgan 5 ebenfalls mit kreisrundem Querschnitt angeordnet. Dieses Drosselorgan ist in seiner vorderen Stirnfläche der Kontur der Mischkammer 2 angepaßt, wie am besten beim Betrachten der Fig. 2 deutlich wird. Es entstehen praktisch zwei Zungen 6, die in der Darstellung nach Fig. 2 seitlich liegen. In dem Drosselorgan ist eine Nut 7 entsprechender Steigung ausgebildet, in die ein Führungsstift 8 hineinragt. Die Verbindung von Führungsstift 8 und Nut 7 ist eine formschlüssige.

Wenn es zur Einflußnahme auf die Mischung in der Mischkammer 2 gewünscht wird, eine Drosselung vorzunehmen, wird das Drosselorgan 5 durch eine entsprechende Einrichtung, beispielswiese hydraulisch, in die Mischkammer 2 eingeschoben. Hierbei gleitet der Führungsstift 8 in der Nut 7, so daß das Drosselorgan zwangsläufig entsprechend der Steigung der Nut 7 gedreht wird. Bei der dargestellten Ausführungsform sind die Verhältnisse so gewählt, daß das Drosselorgan nach Erreichen seiner Endstellung (Fig. 3) um 90° gedreht wurde. Die in Fig. 2 seitlich liegenden Zungen 6 liegen dann in der Stellung nach Fig. 3 oben und unten. Es ist ohne weiteres erkennbar, daß das Drosselorgan durch diese erzwungene Drehung sehr viel weiter in die Mischkammer 2 eingefahren werden kann, da die Zungen 6 erst an die dem Drosselorgan gegenüberliegenden Wandabschnitte der Mischkammer 2 anstoßen. Würde die Drehbewegung nicht stattfinden, so würden die Zungen 6 (siehe Fig. 2) sehr viel früher an die Mischkammerwand anstoßen. Es verbliebe auch eine sehr große ungefähr linsenförmige Öffnung, deren Drosselwirkung entsprechend gering wäre. Durch die Drehung des Drosselorgans beim Vorschieben wird nicht nur ermöglicht, daß das Drosselorgan weiter eingefahren werden kann, sondern die Stirnfläche, deren Form der Kontur der Mischkammer angepaßt ist, wird auch senkrecht gestellt, so daß der zurückliegende Bereich der Stirnfläche des Drosselorgans in der Drosselstellung nicht wirksam wird, da er von den Zungen überdeckt ist.

Es ist für den Fachmann selbstverständlich, daß anstelle der Zwangsführung durch eine Nut und ein Führungselement auch eine andere Möglichkeit vorgesehen sein kann, um das Drosselorgan in der gewünschten Weise zu drehen.

## Patentansprüche

1. Mischkopf zum Vermischen mindestens zweier bei ihrer Reaktion Schaumstoff bildender Kunststoffkomponenten, insbesondere Polyurethan, bestehend aus einem Gehäuse (1), in dem eine, einen hin- und herbewegbaren Reinigungskolben (4) führende Mischkammer (2) ausgebildet ist, in die Eintrittsöffnungen (3) für die Komponenten münden, wobei anschließend an den Bereich der Mischkammer, in den die Eintrittsöffnungen münden, ein vorzugsweise senkrecht zur Mischkammerachse stehendes Drosselorgan (5) vorgesehen ist, das in eine den Querschnitt der Mischkammer drosselnde und eine diese freigebende Stellung bewegbar ist, dadurch gekennzeichnet, daß das Drosselorgan (5) in an sich bekannter Weise mit seiner vorderen Stirnfläche (bei 6) der Kontur der Mischkammer (2) angepaßt ist und daß das Drosselorgan bei seiner Bewegung in die Drosselstellung bis zu 90° drehbar ist.

2. Mischkopf nach Anspruch 1, dadurch gekennzeichnet, daß das Drosselorgan (5) durch eine Zwangsführung (7, 8) drehbar ist.

3. Mischkopf nach Anspruch 2, dadurch gekennzeichnet, daß die Zwangsführung durch eine Nut (7) entsprechender Steigung in dem Drosselorgan (5) und ein in diese Nut hineinragendes Führungselement (8) gebildet ist.

4. Mischkopf nach einem der vorstehenden Ansprüche, dadurch gekennzeichnet, daß das Drosselorgan (5) einen etwas geringeren Querschnitt als die Mischkammer (2) aufweist.

## Claims

1. A mixing head for mixing two or more plastics components which react to form a foam, in particular polyurethane, consisting of a housing (1) which is provided with a mixing chamber (2) in which a purging plunger (4) moves to and fro and into which inlet orifices (3) for the components lead, a flow restrictor (5), which is preferably at right angles to the axis of the mixing chamber and can be moved into a position such that the cross-section of the mixing chamber is restricted and into a position such that this cross-section is opened, being provided downstream of the part of the mixing chamber into which the inlet orifices lead, wherein the front face (at 6) of the flow restrictor (5) is matched to the contour of the mixing chamber (2) in a known manner, and the flow restrictor can be rotated through as much as 90° during its movement into the restricting position.

2. A mixing head as claimed in claim 1, wherein the flow restrictor (5) is rotatable by means of constrained guidance (7, 8).

3. A mixing head as claimed in claim 2, wherein the constrained guidance is effected by a groove (7) of appropriate slope in the flow restrictor (5) and a guide element (8) which projects into this groove.

4. A mixing head as claimed in one of the preceding claims, wherein the flow restrictor (5) has a somewhat smaller cross-section than the mixing chamber (2).

**Revendications**

1. Tête mélangeuse pour mélanger au moins deux composants de matière plastique, formant, lors de leur réaction, un produit alvéolaire, en particulier de polyuréthane, constituée d'un carter (1) dans lequel est formée une chambre de mélange (2) guidant un piston de nettoyage (4) pouvant être animé d'un mouvement de va-et-vient, chambre dans laquelle débouchent des orifices d'entrée (3) pour les composants, un organe d'étranglement (5), disposé de préférence perpendiculairement à l'axe de la chambre de mélange, étant prévu, raccordé à la zone de la chambre de mélange dans laquelle débouchent les orifices d'entrée, organe qui peut être amené dans une position d'étranglement de la section de la chambre de mélange et dans une position libérant celle-ci, caractérisée par le fait que l'organe d'étranglement (5) est ajusté, de manière connue en soi, par sa face frontale avant (par 6), au contour de la chambre de mélange (2) et l'organe d'étranglement, lors de son déplacement en position d'étranglement, peut être amené à tourner de jusqu'à 90°.

2. Tête mélangeuse selon la revendication 1, caractérisée par le fait que l'organe d'étranglement (5) est amené à tourner par un guidage forcé (7, 8).

3. Tête mélangeuse selon la revendication 2, caractérisée par le fait que le guidage forcé est formé par une rainure (7) d'inclinaison correspondante dans l'organe d'étranglement (5) et un élément de guidage (8) faisant saillie dans cette rainure.

4. Tête mélangeuse selon l'une des revendications précédentes, caractérisée par le fait que l'organe d'étranglement (5) possède une section un peu plus petite que la chambre de mélange (2).

FIG. 1

FIG. 2

Schnitt II-II

FIG. 3